# EUROPEAN PATENT SPECIFICATION

(11) **EP 3 388 020 B1**
(45) Date of publication and mention of the grant of the patent: **26.08.2020**
(21) Application number: 16873253.5
(22) Date of filing: 17.11.2016
(51) Int. Cl.: A61C 8/00, A61C 8/02

(54) **MEMBRANE INSTALLATION KIT**
MEMBRANSTIFT INSTALLATIONSKIT
KIT D'INSTALLATION POUR TIGE DE MEMBRANE

(30) Priority: 08.12.2015 KR 20150174034
(43) Date of publication of application: 17.10.2018
(73) Proprietor: Fims Co., Ltd., Suwon-si, Gyeonggi-do 16229 (KR)
(72) Inventor: CHUNG, Sung Min, Suwon-si Gyeonggi-do 16229 (KR); LEE, Sung Geun, Suwon-si Gyeonggi-do 16229 (KR)
(74) Representative: Maiwald Patent- und Rechtsanwaltsgesellschaft mbH
(86) International application number: PCT/KR2016/013290
(87) International publication number: WO 2017/099387

(56) References cited:
- FR-A1- 2 647 665
- JP-A- H0 584 258
- JP-A- H1 052 441
- JP-A- H06 315 490
- KR-B1- 101 261 541
- US-B1- 9 089 384

## Description

### BACKGROUND

### 1. Field

The present invention relates to a membrane pin and a kit for installation of the same. More particularly, the present invention relates to a membrane pin used in dental implant surgery and a membrane pin installation kit including a membrane pin and a pin installation device for installation of the membrane pin.

Such a kit is disclosed in FR2647665.

### 2. Description of the Related Art

Dental implant surgery is a surgical procedure for placing an implant in the alveolar bone of a defect site or an edentulous site after the loss or extraction of a tooth and allows the placed implant to function as a natural tooth. If the bone of a site to be placed with an implant is insufficient, bone grafting or guided bone regeneration (GBR) is performed along with implant placement. Specifically, the guided bone regeneration (GBR) is carried out such that a bone graft material is applied to an insufficient bone site to then be covered by a membrane, which is then covered by the teeth ridge. Here, the membrane is fixed to the alveolar bone using a pin. To prevent the teeth ridge from being damaged when covering the membrane and to lesson patient's foreign body sensation, a head of the pin is thinly formed to have a thickness in the range of about 0.5 mm to about 1 mm.

Meanwhile, the pin is installed using a separate pin installation device coupled to the outer peripheral sure of the head. Since the head is thinly formed, which has been described above, a coupling force between the head of the pin and the pin installation device may become weak, making it impossible to install the membrane pin in a desired location of the alveolar bone as the pin is dislodged from the pin installation device even before it is sufficiently inserted into the alveolar bone while penetrating the membrane. This problem may be aggravated particularly when the alveolar bone is not evenly surfaced.

In addition, the thin head of the membrane pin may make it difficult to locate the pin when the pin is to be later removed after the procedure of osteoplasty (bone formation) is completed.

### SUMMARY

To solve the problems, the present invention provides a membrane pin installation kit, which can maintain a coupling state between a membrane pin and a pin installation device until the membrane pin is sufficiently inserted into the alveolar bone when the membrane pin is installed in the alveolar bone, particularly when the membrane pin is installed in the uneven alveolar bone.

The present invention also provides a membrane pin, which can be easily located when it is to be removed later.

According to an aspect, there is provided a membrane pin including an insertion part penetrating a membrane and inserted into the alveolar bone, a plate-shaped head disposed in the direction traversing the longitudinal direction of the insertion part and having one surface coupled to one end of the insertion part, and a projection formed on the other surface of the head.

According to the present invention, there is provided a membrane pin installation kit according to the appendent claims, including a membrane pin including an insertion part penetrating a membrane and inserted into the alveolar bone, a plate-shaped head disposed in the direction traversing the longitudinal direction of the insertion part and having one surface coupled to one end of the insertion part, and a projection formed on the other surface of the head, and a pin installation device including a head coupling part shaped to correspond to the head of the membrane pin and coupled to the head while being in contact with the outer peripheral surface of the head, and a projection coupling part shaped to correspond to the projection of the membrane pin and coupled to the projection while being in contact with the outer peripheral surface of the projection.

Here, the head of the membrane pin and the head coupling unit of the pin installation device are coupled to each other in an interference fit manner.

In addition, the projection of the membrane pin and the projection coupling unit of the pin installation device may be coupled to each other in an interference fit manner.

As described above, in the membrane pin installation kit according to the present invention, the projection is formed in the head of the membrane pin and the projection coupling unit is formed in the pin installation device. In this way, in coupling the membrane pin and the pin installation device to each other, the head of the membrane pin is coupled to the head coupling unit of the pin installation device and the projection of the membrane pin is coupled to the projection coupling unit of the pin installation device, establishing double coupling, thereby improving a coupling force between the membrane pin and the pin installation device.

Accordingly, the coupling between the membrane pin and the pin installation device can be maintained until the membrane pin is sufficiently inserted into the alveolar bone. Therefore, it is possible to install the membrane pin in a desired location of the alveolar bone.

In addition, the membrane pin can be easily located using the projection formed in the head of the membrane pin when it is to be removed later.

### BRIEF DESCRIPTION OF DRAWINGS

FIG. 1 is a front view of a membrane
FIG. 2 is a perspective view of a pin installation device in a membrane pin installation kit according to an embodiment of the present invention;
FIG. 3 is a partially enlarged view of a portion 'A' in FIG. 2; and
FIG. 4 is a schematic view illustrating a state in which a membrane pin and a membrane pin installation kit are coupled to each other in the membrane pin installation kit according to an embodiment of the present invention.

### DETAILED DESCRIPTION

Hereinafter, a membrane pin installation kit according to an embodiment of the present invention will be described in detail.

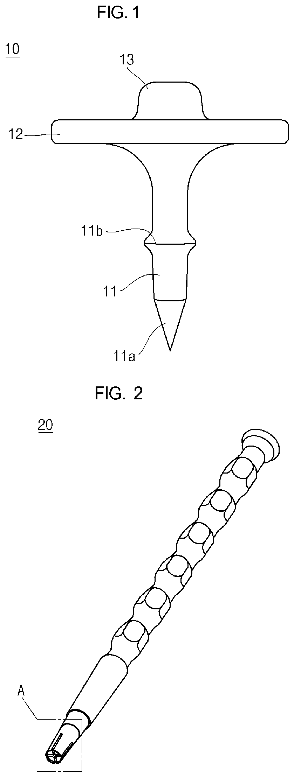

FIG. 1 is a front view of a membrane pin 10.

Referring to FIG. 1, the membrane pin 10 includes an insertion part 11, a head 12 and a projection 13.

The insertion part 11 penetrates the membrane to then be inserted into the alveolar bone, thereby fixing the membrane on the alveolar bone. Therefore, in order for the insertion part 11 to easily penetrate the membrane and to be easily inserted into the alveolar bone, one end 11a of the insertion part 11 may be sharply formed. In addition, in order to improve a fixing force of the insertion part 11 in a state in which the insertion part 11 is inserted into the alveolar bone, a node 11b may be formed to protrude on the outer peripheral surface of the insertion part 11.

The head 12 is substantially shaped of a plate and has one surface thereof coupled to the other end of the insertion part 11. In addition, the head 12 is disposed in the direction traversing the longitudinal direction of the insertion part 11 to prevent the insertion part 11 from being overly inserted into the alveolar bone. In addition, as will later be described, the outer peripheral surface of the head 12 is coupled to the head coupling unit 21 of the pin installation device 20.

The projection 13 is formed to protrude on the other surface of the head 12. As will later be described, the outer peripheral surface of the projection 13 is coupled to the projection coupling unit 22 of the pin installation device 20, thereby reinforcing the overall coupling force between the membrane pin 10 and the pin installation device 20 in addition to the coupling force between the head 12 and the head coupling unit 21 of the pin installation device 20. In addition, the projection 13 may also function to easily locate the membrane pin 10 when the membrane pin 10 is to be removed later. The projection 13 may have a circular cross-section so as to be coupled to the pin installation device 20 in any direction. Alternatively, the projection 13 may have a polygonal cross-section, e.g., a triangular or rectangular cross-section, so as to be prevented from rotating in a state in which it is coupled to the pin installation device 20. In addition, as illustrated in FIG. 1, the projection 13 may consist of a single projection. Alternatively, the projection 13 may consist of two or more projections. In this case, the projection 13 may be formed on the other surface of the head 12 to be symmetrical with respect to the center of the head 12.

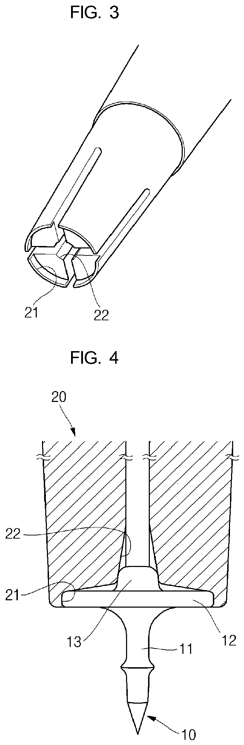

FIG. 2 is a perspective view of a pin installation device 20 in a membrane pin installation kit according to the present invention and FIG. 3 is a partially enlarged view of a portion 'A' in FIG. 2.

Referring to FIGS. 2 and 3, the pin installation device 20 includes a head coupling unit 21 and a projection coupling unit 22.

The head coupling unit 21 has an internal peripheral surface shaped to correspond the outer peripheral surface of the head 12 of the membrane pin 10 and is coupled to the head 12 while being in contact with the outer peripheral surface of the head 12. Here, the internal diameter of the head coupling unit 21 may be smaller than the outer diameter of the head 12, so that the head coupling unit 21 and the head 12 are coupled to each other in an interference fit manner. In addition, the head coupling unit 21 is circumferentially divided into a plurality of sections, so that the divided sections of the head coupling unit 21 are separated apart from one another when the head coupling unit 21 is fitted into the head 12, thereby permitting elastic deformation of the head coupling unit 21 to be fitted into the head 12.

The projection coupling unit 22 is shaped to have the internal peripheral surface thereof corresponding to the outer peripheral surface of the projection 13 of the membrane pin 10 and is coupled to the projection 13 while being in contact with the outer peripheral surface of the projection 13. Like the head coupling unit 21, the projection coupling unit 22 is shaped to have the internal peripheral surface thereof corresponding to the outer peripheral surface of the projection 13 and is coupled to the projection 13 in an interference fit manner. In addition, the projection coupling unit 22 is also circumferentially divided into a plurality of sections, so that the divided sections of the projection coupling unit 22 are separated apart from one another when the projection coupling unit 22 is fitted into the projection 13, thereby permitting elastic deformation of the projection coupling unit 22 to be fitted into the projection 13.

FIG. 4 is a schematic view illustrating a state in which a membrane pin 10 and a membrane pin installation device 20 are coupled to each other in the membrane pin installation kit according to an embodiment of the present invention.

Referring to FIG. 4, as described above, the outer peripheral surface of the head 12 of the membrane pin 10 and the head coupling unit 21 of the pin installation device 20 are brought into contact with each other, thereby coupling the head 12 and the head coupling unit 21 to each other. In addition, the outer peripheral surface of the projection 13 of the membrane pin 10 and the projection coupling unit 22 of the pin installation device 20 are brought into contact with each other, thereby coupling the projection 13 and the projection coupling unit 22 to each other. The membrane pin 10 and the pin installation device 20 are doubly coupled to each other such that the head 12 and the head coupling unit 21 are coupled to each other and the projection 13 and the projection coupling unit 22 are coupled to each other, thereby improving the coupling force between the membrane pin 10 and the pin installation device 20. Therefore, even when the membrane pin 10 is installed in the uneven alveolar bone, the coupling between the membrane pin 10 and the pin installation device 20 can be maintained until the membrane pin 10 is sufficiently inserted into the alveolar bone, thereby installing the membrane pin 10 in a desired location of the alveolar bone.

While the present invention has been described herein with reference to certain embodiments, it is to be understood by those skilled in the art that the described and illustrated embodiments should not be taken as limiting the present invention. The scope of the present invention can be limited only by the appended claims.

## Claims

1. A membrane pin installation kit comprising:
a membrane pin (10) including an insertion part (11) which can penetrate a membrane and can be inserted into the alveolar bone, a plate-shaped head (12) disposed in the direction traversing the longitudinal direction of the insertion part (11) and having one surface coupled to one end of the insertion part (11), and a projection (13) formed on the other surface of the head (12); and
a pin installation device (20) including a head coupling unit (21) shaped to correspond to the head (12) of the membrane pin (10) and coupled to the head (12) while being in contact with the outer peripheral surface of the head (12), and a projection coupling unit (22) shaped to correspond to the projection (13) of the membrane pin (10) and coupled to the projection (13) while being in contact with the outer peripheral surface of the projection (13), **characterized in that** the head coupling unit and projection coupling unit (21, 22) are circumferentially divided into a plurality of sections.

2. The membrane pin installation kit of claim 1, wherein the head (12) of the membrane pin (10) and the head coupling unit (21) of the pin installation device (20) are coupled to each other in an interference fit manner.

3. The membrane pin installation kit of claim 1, wherein the projection (13) of the membrane pin (10) and the projection coupling unit (22) of the pin installation device (20) are coupled to each other in an interference fit manner.

## Patentansprüche

1. Ein Membranstift-Installationssatz, umfassend:
einen Membranstift (10) mit einem Einführungsteil (11), der eine Membran durchdringen kann und in den Alveolarknochen einführbar ist, einen plattenförmigen Kopf (12), der in der Richtung quer zur Längsrichtung des Einführungsteils (11) angeordnet ist und eine Oberfläche aufweist, die mit einem Ende des Einführungsteils (11) gekoppelt ist, und einen Vorsprung (13), der auf der anderen Oberfläche des Kopfes (12) ausgebildet ist,
und
eine Stift-Installationsvorrichtung (20) mit einer Kopf-Kopplungseinheit (21), die so geformt ist, dass sie dem Kopf (12) des Membranstifts (10) entspricht und mit dem Kopf (12) gekoppelt ist, während sie mit der äußeren Umfangsfläche des Kopfes (12) in Kontakt steht, und eine Vorsprungs-Kopplungseinheit (22), die so geformt ist, dass sie dem Vorsprung (13) des Membranstifts (10) entspricht, und die mit dem Vorsprung (13) gekoppelt ist, während sie mit der äußeren Umfangsfläche des Vorsprungs (13) in Kontakt steht, **dadurch gekennzeichnet, dass** die Kopf-Kopplungseinheit und die Vorsprungs-Kopplungseinheit (21, 22) in Umfangsrichtung in eine Vielzahl von Abschnitten unterteilt sind.

2. Membranstift-Installationssatz nach Anspruch 1, wobei der Kopf (12) des Membranstifts (10) und die Kopf-Kopplungseinheit (21) der Stift-Installationsvorrichtung (20) in einer Presspassung miteinander gekoppelt sind.

3. Membranstift-Installationssatz nach Anspruch 1, wobei der Vorsprung (13) des Membranstifts (10) und die Vorsprungs-Kopplungseinheit (22) der Stift-Installationsvorrichtung (20) in einer Presspassung miteinander gekoppelt sind.

## Revendications

1. Kit d'installation de tige de membrane comprenant :
une tige de membrane (10) comportant une partie d'insertion (11) qui peut pénétrer dans une membrane et peut être insérée dans l'os alvéolaire, une tête en forme de plaque (12) disposée dans la direction traversant la direction longitudinale de la partie d'insertion (11) et ayant une surface accouplée à une extrémité de la partie d'insertion (11), et une saillie (13) formée sur l'autre surface de la tête (12) ; et
un dispositif d'installation de tige (20) comportant une unité d'accouplement de tête (21) formée pour correspondre à la tête (12) de la tige de membrane (10) et accouplée à la tête (12) tout en étant en contact avec la surface périphérique extérieure de la tête (12), et une unité d'accouplement de saillie (22) formée pour correspondre à la saillie (13) de la tige de membrane (10) et accouplée à la saillie (13) tout en étant en contact avec la surface périphérique extérieure de la saillie (13),
**caractérisé en ce que**
l'unité d'accouplement de tête et l'unité d'accouplement de saillie (21, 22) sont circonférentiellement divisées en une pluralité de sections.

2. Kit d'installation de tige de membrane selon la revendication 1, dans lequel la tête (12) de la tige de membrane (10) et l'unité d'accouplement de tête (21) du dispositif d'installation de tige (20) sont accouplées l'une à l'autre à la manière d'un ajustement serré.

3. Kit d'installation de tige de membrane selon la revendication 1, dans lequel la saillie (13) de la tige de membrane (10) et l'unité d'accouplement de saillie (22) du dispositif d'installation de tige (20) sont accouplées l'une à l'autre à la manière d'un ajustement serré.
